(19) Europäisches Patentamt
European Patent Office
Office européen des brevets

(11) EP 4 428 160 A1

(12) EUROPEAN PATENT APPLICATION

(43) Date of publication:
**11.09.2024 Bulletin 2024/37**

(21) Application number: **23160497.6**

(22) Date of filing: **07.03.2023**

(51) International Patent Classification (IPC):
***C08F 2/06*** *(2006.01)* ***C08F 212/08*** *(2006.01)*
***C08F 236/06*** *(2006.01)* ***C08F 236/10*** *(2006.01)*

(52) Cooperative Patent Classification (CPC):
(C-Sets available)
**C08F 236/10; C08F 2/06; C08F 212/08;**
**C08F 236/06;** C08F 4/44; C08F 4/48 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Evonik Operations GmbH**
**45128 Essen (DE)**

(72) Inventors:
- **SCHWEISSINGER, Emily Claire**
  **44369 Dortmund (DE)**
- **KRANNING, Kai-Steffen**
  **44229 Dortmund (DE)**
- **GROSS-ONNEBRINK, Yvonne**
  **46348 Raesfeld (DE)**
- **HERWIG, Jürgen**
  **46569 Hünxe (DE)**
- **FREY, Guido Dieter**
  **64560 Riedstadt (DE)**

(74) Representative: **Evonik Patent Association**
**c/o Evonik Industries AG**
**IP Management**
**Bau 1042A/PB 15**
**Paul-Baumann-Straße 1**
**45772 Marl (DE)**

# (54) PROCESS FOR PREPARING 1,3-BUTADIENE COPOLYMERS

(57) The present invention relates to a process for preparing a copolymer based on at least 1,3-butadiene and at least one hydrocarbon different from 1,3-butadiene comprising at least one olefinic double bond as monomers by solution polymerization utilizing one or more lithium organic compounds as initiator, wherein the polymerization is performed at a temperature of the reaction mixture of from 0 °C to 50 °C, to a copolymer comprising units derived from 1,3-butadiene and units derived from at least one hydrocarbon different from 1,3-butadiene comprising at least one olefinic double bond as monomer, wherein that the copolymer comprises the monomer units derived from 1,3-butadiene of formula (A), (8), and (C) wherein the proportion of (A) in the entirety of the 1,3-butadiene-derived monomer units present in the copolymer is at least 60 mol-%, and wherein the sum of the proportions of (8) and (C) in the entirety of the 1,3-butadiene-derived monomer units present in the polybutadiene is not more than 40 mol-%, and wherein the copolymer has a number average molecular weight Mn of from 1,350 to 25,000 g/mol, and to the use of a copolymer according to the invention as reactive crosslinker.



Processed by Luminess, 75001 PARIS (FR)

(Cont. next page)

(52) Cooperative Patent Classification (CPC): (Cont.)

C-Sets
**C08F 212/08, C08F 236/06**

## Description

The present invention relates to a process for preparing a copolymer based on at least 1,3-butadiene and at least one hydrocarbon different from 1,3-butadiene comprising at least one olefinic double bond as monomers by solution polymerization utilizing one or more lithium organic compounds as initiator, wherein the polymerization is performed at a temperature of the reaction mixture of from 0 °C to 50 °C, to a copolymer comprising units derived from 1 ,3-butadiene and units derived from at least one hydrocarbon different from 1,3-butadiene comprising at least one olefinic double bond as monomer, wherein that the copolymer comprises the monomer units derived from 1,3-butadiene of formula (A), (B), and (C) wherein the proportion of (A) in the entirety of the 1,3-butadiene-derived monomer units present in the copolymer is at least 60 mol-%, and wherein the sum of the proportions of (B) and (C) in the entirety of the 1,3-butadiene-derived monomer units present in the polybutadiene is not more than 40 mol-%, and wherein the copolymer has a number average molecular weight Mn of from 1,350 to 25,000 g/mol, and to the use of a copolymer according to the invention as reactive crosslinker.

Copolymers based on at least 1,3-butadiene and styrene as monomers are well known from rubber industries. The production of those copolymers (styrene-butadiene rubber) is normally done by anionic-initiated polymerization.

US 2010/0206443 A1 describes a process for preparing a solution-polymerized styrene butadiene rubber (s-SBR) having a number average molecular weight which is within the range of about 100,000 to about 475,000 g/mol.

CN 100596300 C describes a process of anionic-initiated polymerization for preparing a butadienestyrene random copolymer substantially free of styrene micro-blocks having a number-average molecular weight Mn of from 50,000 to 600,000 g/mol.

CN109749010A describes a random copolymer, the application of the random copolymer in tire tread rubber, and the preparation of the random copolymer by anionic polymerization. The random copolymer obtained has a number average molecular weight (Mn) of 70,000 to 220,000 g/mol and a molecular weight distribution index (Mw/Mn) of 1.03 to 1.1, preferably 1.05 to 1.07. The polymerization temperature used is in the range of from 50 to 95 °C.

In US 4,367,325 A, a method for synthesizing rubber with high vinyl content (80% and more) by anionic polymerization is described. The reaction needs to be carried out at a low starting temperature of 0 °C followed by a maximum polymerization temperature of 80 °C. The document is silent about the molecular weight of the copolymers produced.

US 4,139,690 A describes a process for preparing conjugated diene polymers by either polymerizing at least one selected from a group of conjugated diene compounds or copolymerizing a conjugated diene compound with an alkenyl aromatic compound. The polymerization temperature usually ranges from -80 °C to 150 °C. The document is silent about the molecular weight of the copolymers produced. The copolymers show a vinyl content of below 50%.

In light of this background, it was an object of the invention to provide a process for preparing copolymers with a low molecular weight and a low dispersity while also having a high vinyl content.

Surprisingly, it has been found that these and further objects can be achieved by the subject matter of the present patent application and especially by the subject matter of the accompanying independent claims, with embodiments being specified in the dependent claims.

The present invention accordingly provides a process for preparing a copolymer based on at least 1,3-butadiene and at least one hydrocarbon different from 1,3-butadiene comprising at least one olefinic double bond as monomers by solution polymerization utilizing one or more lithium organic compounds as initiator, wherein the polymerization is performed at a temperature of the reaction mixture from 0 °C to 50 °C.

The present invention further provides a copolymer comprising units derived from 1,3-butadiene and units derived from at least one hydrocarbon different from 1,3-butadiene comprising at least one olefinic double bond as monomer, wherein that the copolymer comprises the monomer units derived from 1 ,3-butadiene of formula (A), (B), and (C) wherein the proportion of (A) in the entirety of the 1 ,3-butadiene-derived monomer units present in the copolymer is at least 60 mol-%, and wherein the sum of the proportions of (B) and (C) in the entirety of the 1,3-butadiene-derived monomer units present in the polybutadiene is not more than 40 mol-%, and wherein the copolymer has a number average molecular weight Mn of from 1,350 to 25,000 g/mol.

The present invention is also directed to the use of a copolymer according to the invention as reactive crosslinker.

The process according to the invention has the advantage that the reaction has a lower exothermic reaction potential and can therefore be run in a much safer way.

The process of the present invention has the further advantage, that copolymers based on at least 1,3-butadiene and at least one hydrocarbon different from 1,3-butadiene comprising at least one olefinic double bond, most preferably styrene can be produced, having a low molecular weight and a lower dispersity compared to copolymers already known in the art.

The copolymers according to the invention have a high number of vinyl groups and therefore excellent properties when used as a crosslinker.

The copolymer according to the invention can be used as raw material for addition reactions, making copolymers

with different functionalizations available.

The process, product and use according to the invention are described below by way of example, without any intention that the invention be limited to these illustrative embodiments. Where ranges, general formulae or classes of compounds are specified below, these are intended to encompass not only the corresponding ranges or groups of compounds, which are explicitly mentioned but also all subranges and subgroups of compounds which can be obtained by removing individual values (ranges) or compounds. Where documents are cited in the context of the present description, their content shall fully form part of the disclosure content of the present invention, particularly in respect of the matters referred to. Where figures are given in per cent hereinafter, these are percentages by weight unless stated otherwise. Where averages, for example molar mass averages, are specified hereinafter, these are the weight average unless stated otherwise. Where properties of a material are referred to hereinafter, for example viscosities or the like, these are properties of the material at 20 °C unless stated otherwise. Where chemical (empirical) formulae are used in the present invention, the given indices may be either absolute numbers or average values. For polymeric compounds, the indices preferably represent average values.

The process according to the invention for preparing a copolymer based on at least 1,3-butadiene and at least one hydrocarbon different from 1 ,3-butadiene comprising at least one olefinic double bond as monomers by solution polymerization utilizing one or more lithium organic compounds as initiator, is performed at a temperature of the reaction mixture of from 0 °C to 50 °C, preferably of from 5 °C to 45 °C.

Preferred hydrocarbons different from 1 ,3-butadiene and comprising at least one olefinic double bond are preferably selected from the group consisting of styrene, divinylbenzene, ethyl-vinylbenzene, diisopropenylbenzene, and isoprene. More preferably styrene, divinylbenzene, or mixtures thereof are used as hydrocarbons different from 1 ,3-butadiene. Most preferably styrene is used as hydrocarbon different from 1,3-butadiene.

Preferably the starting temperature is in a temperature range of from 0 to 20 °C. At this starting temperature preferably the lithium organic compound and at least one of the monomers is added to the reaction mixture, which preferably already includes a solvent.

In the process according to the invention any solvent that is inert to the other compounds present in the reaction mixture can be used as a solvent. Preferred solvents used are hydrocarbons, more preferably pentane, isooctane, n-octane, cyclohexane, n-hexane, benzene, toluene, xylene, and ethylbenzene, alone or in admixture thereof. Most preferably cyclohexane, n-octane, or toluene is used as solvent. Even more preferably cyclohexane is used as solvent.

In the process according to the invention any suitable lithium organic can be used as initiator. Typical examples of the organolithium initiators useful in the practice of the invention are alkyl lithiums, such as ethyl lithium, propyl lithium, n-butyl lithium, sec-butyl lithium, or tert-butyl lithium; aryl lithiums, such as phenyl lithium or tolyl lithium; alkenyl lithium, such as vinyl lithium or propenyl lithium; alkylene dilithiums, such as tetramethylene dilithium, pentamethylene dilithium, hexamethylene dilithium, or decamethylene dilithium; arylene dilithiums, such as 1,3-dilithiobenzene or 1,4-dilithiobenzene; and 1,3,5-trilithiocyclohexane, 1,2,5-trilithionaphthalene, 1,3,5,8-tetralithiodecane, and 1,2,3,5-tetralithio-4-hexylanthracene. Of these initiators, n-butyl lithium, sec-butyl lithium, tert-butyl lithium, and tetramethylene dilithium are preferable, and n-butyl lithium is most preferably used as an initiator.

The amount of the organolithium initiator to be used depends on the polymerization rate and the molecular weight of the product polymer desired. In terms of lithium atoms, usually an amount from 0.2 to 25 grams lithium atoms, preferable from 0.5 to 15 grams lithium atoms, per 1000 grams of the total sum of monomers used will give satisfactory result.

In the process according to the invention the polymerization is preferably performed at a pressure of from 0.1 to 5 MPa, more preferably from 0.2 to 0.6 MPa. The pressure can be adjusted using an inert gas. Preferable inert gases used are noble gases, e.g. helium or argon, or nitrogen. Most preferably nitrogen is used as inert gas.

The process according to the invention can be performed as discontinuous (batchwise) process or as continuous process. Preferably the process is performed as discontinuous (batchwise) process.

Preferably an amount of from 34 to 82% by weight of 1,3-butadiene, more preferably an amount of 45 to 75% by weight of 1,3 butadiene, and most preferably of from 55 to 65% by weight of 1,3-butadiene based on the total mass of monomers is added to the reaction mixture.

In the process according to the invention it might be advantageous that first styrene is added to the reaction mixture and only after the addition of the styrene is complete the 1,3-butadiene and optional monomers are added to the reaction mixture. In the event that block-copolymers shall be produced, the addition of the 1,3-butadiene and optional monomers should be started only after the polymerization of the first added monomer is completed.

It might be advantageous to add a Lewis base to the reaction mixture as a randomizing agent as suggested by US 2,975,160. Typical Lewis bases include ethers, tertiary amines, phosphines, and sulfides. Suitable Lewis bases are for example diethyl ether, di-n-propyl ether, di-isopropyl ether, di-n-butylether, ethyl butyl ether, ethylene glycol dimethyl ether, diethylene glycol diethyl ether, triethylene glycol dimethyl ether, tetrahydrofuran, alpha-methoxytetrahydrofuran, alpha-methyltetrahydrofuran, dioxane, and 1,2-dimethoxybenzene. Among useful tertiary amines are trimethylamine, triethylamine, N,N,N',N'-tetramethylethylenediamine, N-methylmorpholine, N-ethylmorpholine, and N-phenylmorpholine. Suitable sulfide compounds are dialkyl and diallyl sulfides. Moreover, certain phosphorus compounds, e.g., hexamethyl phosphoric triamide, may be used.

Of the Lewis bases mentioned above, preferred ones are diethyl ether, di-n-butyl ether, ethylene glycol dimethyl ether, ethylene glycol diethyl ether, diethylene glycol diethyl ether, tetrahydrofuran, dioxane, triethylamine, and N,N,N',N'-tetramethyl ethylenediamine. More preferred are ethylene glycol dimethyl ether, diethylene glycol dimethyl ether, and tetrahydrofuran. Most preferable tetrahydrofuran is added as Lewis base.

In accordance with the invention, the Lewis base is preferably used in an amount from 0.02 to 100 moles, preferably from 0.05 to 30 moles, per mole of the lithium atoms.

The process according to the invention can be performed in any suitable vessel. Preferably the process is conducted in a stainless-steel autoclave as reactor. The vessel preferably is made from stainless steel. The vessel preferably shows a pressure rating of from 0.01 to 4.0 MPa.

The process according to the invention can be used to produce the copolymers according to the invention.

The copolymers according to the invention comprise units derived from 1,3-butadiene and units derived from at least one hydrocarbon different from 1,3-butadiene comprising at least one olefinic double bond as monomer, wherein the copolymer comprises the monomer units derived from 1,3-butadiene

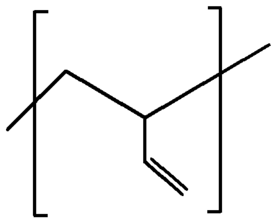

(A),

in literature often named vinyl unit,

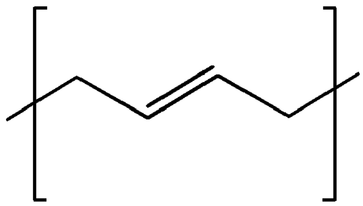

(B),

in literature often named trans unit,
and

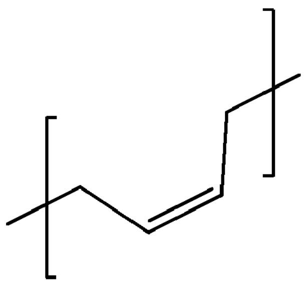

(C),

in literature often named cis unit,
wherein the proportion of (A), in the entirety of the 1 ,3-butadiene-derived monomer units present in the copolymer is at least 60 mol-%, preferably at least 70 mol-%, and more preferably at least 80 mol-% and wherein the sum of the proportions of (B) and (C) in the entirety of the 1,3-butadiene-derived monomer units present in the polybutadiene is not more than 40 mol-%, preferably not more than 30 mol-%, and more preferably not more than 20 mol-%, and that the copolymer has a number average molecular weight Mn of from 1,350 to 25,000 g/mol, preferably of from 1,500 to 10,000 g/mol, and more preferably of from 2,000 to 5,400 g/mol. The method for determination of the proportion of the units (A), (B), and (C), and of the number average molecular weight is given in the example section below.

The copolymer according to the invention has preferably a polydispersity of from 1.0 to 2.6, more preferably of

from 1.05 to 1.4, determined as given in the example section below.

The copolymer according to the invention has preferably a glass transition temperature $T_G$ of from - 24 °C to 5 °C, preferably of from -15 °C to 0 °C determined by the method given in the example section below.

The copolymers according to the invention are preferably liquid at room temperature (23 °C). Preferably the copolymers according to the invention have a viscosity of at least 50 Pa*s at 20 °C, determined by the method described in the example section.

The copolymer according to the invention can comprise one or more units derived from styrene, divinylbenzene, ethyl-vinylbenzene, diisopropenylbenzene, and/or isoprene used as at least one hydrocarbon different from 1,3-butadiene comprising at least one olefinic double bond as (co-monomer. Preferably the copolymer comprises one or more units derived from styrene and divinylbenzene as monomer, more preferably the copolymer comprises one or more units derived from styrene as (co-)monomer only.

The copolymer according to the invention is preferably a random copolymer or a block copolymer, more preferably the copolymer is a random copolymer.

The copolymer according to the invention can be prepared by any known suitable processes. Preferably the copolymer according to the invention is prepared by the process according to the invention.

The copolymer according to the invention might be used, as a reactive crosslinker, preferably for the preparation of casting compounds.

The present invention will be further illustrated by the following nonlimiting examples which indicate further features, embodiments, aspects, and advantages of the present invention.

**Examples:**

**Raw materials used:**

Table 1 below gives an overview of the (raw) materials used

Table 1: (raw) materials used

| Name | Function | Manufacturer |
|---|---|---|
| TONSIL® | filtration aid | Clariant |
| 2M n-butyl lithium (in hexane) | initiator | Albemarle |
| cyclohexane | solvent | Sigma-Aldrich |
| methanol | deactivator | Sigma-Aldrich |
| THF | solvent | Sigma-Aldrich |
| 1,3-butadiene | monomer | Evonik Operations GmbH |
| styrene | monomer | Sigma-Aldrich |
| Divinyl benzene | monomer | Sigma-Aldrich |
| toluene | solvent | Sigma-Aldrich |
| n-octane | solvent | Sigma-Aldrich |
| K800 | filter | Seitz-Pall |

**Test methods:**

a) Determination of glass transition temperature $T_G$:

The glass transition temperature was determined by Differential Scanning Calorimetry (DSC). For differential scanning calorimetry a DSC Q2000 from TA Instruments was used. The samples of 5 mg to 10 mg were filled into an aluminum pan (Tzero) and are heated from -100 to 200 °C at a rate of 10 K/min. The reported values were determined with a TA Universal Analysis from the third heating cycle.

b) Determination of molecular weight and dispersity:

The number-average and weight-average molecular weight (Mn and Mw, respectively) of the polymers in the

context of the present invention is determined according to DIN 55672-1 by means of gel permeation chromatography in tetrahydrofuran as eluent and polystyrene for calibration. Measurements were carried out at 40 °C in tetrahydrofuran (THF) at a concentration of 5 g/l and a flow rate of 0.3 ml/min. Chromatographic separation was achieved using a PSS SDV Micro 5μ / 4.6 x 30 mm precolumn and a PSS SDV Micro linear S 5μ / 4.6 x 300 mm (2x) separation column. Detection was by means of an RI detector. Calibration was carried out by means of polybutadiene standards (PSS-Kit polybutadiene-1,4, Mp 831-106000, Part No.:PSS-bdflcit, Mn: 1830/4330/9300/18000/33500). Dispersity D = Mw/Mn.

c) Determination of viscosity:

The viscosity of the copolymers produced was determined in accordance with DIN EN ISO 3219 in Pa.s using a rotational viscometer at the temperature specified in each case.

d) Determination of the molar proportions of the monomer units

The molar proportions of the monomer units according to the formula (A), (B) and (C) are determined by IR spectroscopy relative to polybutadiene standards. For this purpose, the samples (ca. 80 to 250 mg) are dissolved in 10 ml of carbon disulfide ($CS_2$). In the case of high vinyl content low concentrations are used and at high cis content higher concentrations are used. The measurements are carried out in IR cuvettes with NaCl windows and 0.5 mm path length. The solvent is subtracted and the spectrum is shown as absorbance in the evaluation range 1100 to 600 $cm^{-1}$. At absorbances above 1, the measurement is repeated with a lower concentration. The absorbances above baselines of the following signals are determined:

trans-1,4-polybutadiene: 968 $cm^{-1}$
1,2-polybutadiene: 911 $cm^{-1}$
cis-1,4-polybutadiene: 730 $cm^{-1}$

The molar proportions of the monomer components are given by

$$(comp(i) = Ext(i) * 100\% / (E(i) * c * d *)$$

where

Ext(i) = absorbance above baseline
E(i) = extinction coefficient (substance specific, to be determined by calibration) [E] = L/(g*cm)
d = path length of the cuvette in cm
c = concentration of the sample in g/L

**Example 1:**

2128 g of dried cyclohexane were firstly placed in a passivated, pressure-resistant 5 I stainless steel autoclave from Büchi (model 4; stainless steel: 1.4571; pressure rating: from -0.1 to 4.0 MPa) as reactor and cooled down to a temperature of 10 °C. Subsequently, 47.5 g of THF and 2 M n-butyl lithium (82.4 ml) were added while keeping the temperature of the reaction mixture at 10 °C. Subsequently 225.4 g styrene was added continuously at a pressure of 0.1 MPa within 15 minutes in such a way, that the temperature of the reaction mixture did not went up above 15 °C. Thereafter the pressure in the reactor is increased to 0.35 MPa using nitrogen and 351.2 g 1,3-butadiene were added continuously within 30 minutes while keeping the temperature at 25 °C. The pressure in the reactor increased to 0.4 MPa. After the addition of the 1 ,3-butadiene was complete the reaction mixture was stirred for 30 minutes at a temperature of 30 °C. Then the reaction mixture was cooled down to 20 °C. At atmospheric pressure 26.4 g of methanol were added and the reaction mixture was stirred for another 30 minutes.

Afterwards 50 g of the filtration aid TONSIL®, sold by Clariant, was added and then the reaction mixture was filtrated, using a K800 filter from Seitz-Pall. From the raw solution obtained as filtrate the solvent(s) were removed using a rotary evaporator and reduced atmospheric pressure up to 10 mbar. 550 g of a clear, viscous liquid was obtained which corresponds to a yield of about 95%. The product was analyzed, and the results are given in table 2 below.

**Example 2:**

715 g of dried cyclohexane were firstly placed in a passivated, pressure-resistant 5 I stainless steel autoclave

from Büchi (model 4; stainless steel: 1.4571; pressure rating: from -0.1 to 4.0 MPa) as reactor and cooled down to a temperature of 7 °C. Subsequently, 358 g of THF and 2 M n-butyl lithium (229.8 ml) were added while keeping the temperature of the reaction mixture at 10 °C. Subsequently 338.9 g styrene was added continuously at a pressure of 0.1 MPa within 25 minutes in such a way, that the temperature of the reaction mixture did not went up above 15 °C. Thereafter the pressure in the reactor is increased to 0.35 MPa using nitrogen and 920.1 g 1,3-butadiene were added continuously within 65 minutes while keeping the temperature at 25 °C. The pressure in the reactor increased to 0.4 MPa. After the addition of the 1 ,3-butadiene was complete the reaction mixture was stirred for 30 minutes at a temperature of 40 °C. Then the reaction mixture was cooled down to 20 °C. At atmospheric pressure 51.3 g of methanol were added and the reaction mixture was stirred for another 30 minutes.

Afterwards 30 g of the filtration aid TONSIL®, sold by Clariant, was added and then the reaction mixture was filtrated, using a K800 filter from Seitz-Pall. From the raw solution obtained as filtrate the solvent(s) were removed using a rotary evaporator and reduced atmospheric pressure up to 10 mbar. 1230 g of a clear, viscous liquid was obtained which corresponds to a yield of about 94%. The product was analyzed, and the results are given in table 2 below.

**Example 3:**

2180 g of dried cyclohexane were firstly placed in a passivated, pressure-resistant 5 l stainless steel autoclave from Büchi (model 4; stainless steel: 1.4571; pressure rating: from -0.1 to 4.0 MPa) as reactor and cooled down to a temperature of 10 °C. Subsequently, 41.8 g of THF and 2 M n-butyl lithium (119 ml) were added while keeping the temperature of the reaction mixture at 10 °C. Subsequently 296.7 g styrene was added continuously at a pressure of 0.1 MPa within 30 minutes in such a way, that the temperature of the reaction mixture did not went up above 15 °C. Thereafter the pressure in the reactor is increased to 0.35 MPa using nitrogen and 290 g 1,3-butadiene were added continuously within 45 minutes while keeping the temperature at 20 °C. The pressure in the reactor increased to 0.4 MPa. After the addition of the 1 ,3-butadiene was complete the reaction mixture was stirred for 60 minutes at a temperature of 40 °C. Then the reaction mixture was cooled down to 20 °C. At atmospheric pressure 38.2 g of methanol were added and the reaction mixture was stirred for another 30 minutes at a temperature of 23 °C.

Afterwards 80 g of the filtration aid TONSIL®, sold by Clariant, was added and then the reaction mixture was filtrated, using a K800 filter from Seitz-Pall. From the raw solution obtained as filtrate the solvent(s) were removed using a rotary evaporator and reduced atmospheric pressure up to 10 mbar. 580 g of a clear, viscous liquid was obtained which corresponds to a yield of about 99%. The product was analyzed, and the results are given in table 2 below.

**Example 4:**

2170 g of dried cyclohexane were firstly placed in a passivated, pressure-resistant 5 l stainless steel autoclave from Büchi (model 4; stainless steel: 1.4571; pressure rating: from -0.1 to 4.0 MPa) as reactor and cooled down to a temperature of 10 °C. Subsequently, 25.1 g of THF and 2 M n-butyl lithium (62 ml) were added while keeping the temperature of the reaction mixture at 10 °C. Subsequently 225.9 g styrene was added continuously at a pressure of 0.1 MPa within 30 minutes in such a way, that the temperature of the reaction mixture did not went up above 15 °C. Thereafter the pressure in the reactor is increased to 0.35 MPa using nitrogen and 353 g 1,3-butadiene were added continuously within 45 minutes while keeping the temperature at 20 °C. The pressure in the reactor increased to 0.4 MPa. After the addition of the 1 ,3-butadiene was complete the reaction mixture was stirred for 20 minutes at a temperature of 30 °C. Then the reaction mixture was cooled down to 20 °C. At atmospheric pressure 20 g of methanol were added and the reaction mixture was stirred for another 30 minutes at a temperature of 23 °C.

Afterwards 20 g of the filtration aid TONSIL®, sold by Clariant, was added and then the reaction mixture was filtrated, using a K800 filter from Seitz-Pall. From the raw solution obtained as filtrate the solvent(s) were removed using a rotary evaporator and reduced atmospheric pressure up to 10 mbar. 551 g of a clear, viscous liquid was obtained which corresponds to a yield of about 95%. The product was analyzed, and the results are given in table 2 below.

**Example 5:**

1378 g of dried n-octane were firstly placed in a passivated, pressure-resistant 5 l stainless steel autoclave from Büchi (model 4; stainless steel: 1.4571; pressure rating: from -0.1 to 4.0 MPa) as reactor and cooled down to a temperature of 10 °C. Subsequently, 84.8 g of THF and 2 M n-butyl lithium (147 ml) were added while keeping the temperature of the reaction mixture at 10 °C. Subsequently 400.6 g styrene was added continuously at a pressure of 0.1 MPa within 60 minutes in such a way, that the temperature of the reaction mixture did not went up above 18 °C. Thereafter the pressure in the reactor is increased to 0.35 MPa using nitrogen and 623 g 1,3-butadiene were added continuously within 65 minutes while keeping the temperature at 28 °C. The pressure in the reactor increased to 0.4 MPa. After the addition of the 1 ,3-butadiene was complete the reaction mixture was stirred for 20 minutes at a temperature

of 35 °C. Then the reaction mixture was cooled down to 20 °C. At atmospheric pressure 47 g of methanol were added and the reaction mixture was stirred for another 30 minutes at a temperature of 23 °C.

Afterwards 80 g of the filtration aid TONSIL®, sold by Clariant, was added and then the reaction mixture was filtrated, using a K800 filter from Seitz-Pall. From the raw solution obtained as filtrate the solvent(s) were removed using a rotary evaporator and reduced atmospheric pressure up to 10 mbar. 998 g of a clear, viscous liquid was obtained which corresponds to a yield of about 97%. The product was analyzed, and the results are given in table 2 below.

**Example 6: block-co-polymer**

1255 g of dried cyclohexane were firstly placed in a passivated, pressure-resistant 5 l stainless steel autoclave from Büchi (model 4; stainless steel: 1.4571; pressure rating: from -0.1 to 4.0 MPa) as reactor and cooled down to a temperature of 10 °C. Subsequently, 55 g of THF and 2 M n-butyl lithium (190 ml) were added while keeping the temperature of the reaction mixture at 10 °C. Subsequently 260 g styrene was added continuously at a pressure of 0.1 MPa within 30 minutes in such a way, that the temperature of the reaction mixture did not went up above 15 °C. Thereafter the pressure in the reactor was increased to 0.35 MPa using nitrogen and 811 g 1,3-butadiene were added continuously within 45 minutes while keeping the temperature at 20 °C. The pressure in the reactor increased to 0.4 MPa. After the addition of the 1 ,3-butadiene was complete the reaction mixture was stirred for 30 minutes at a temperature of 30 °C. Subsequently a second portion of 260 g styrene was added continuously within 20 minutes at 30 °C. The pressure was released to atmospheric pressure and 61 g of methanol were added and the reaction mixture was stirred for another 30 minutes at a temperature of 23 °C.

Afterwards 30 g of the filtration aid TONSIL®, sold by Clariant, was added and then the reaction mixture was filtrated, using a K800 filter from Seitz-Pall. From the raw solution obtained as filtrate the solvent(s) were removed using a rotary evaporator and reduced atmospheric pressure up to 10 mbar. 1224 g of a clear, viscous liquid was obtained which corresponds to a yield of about 92%. The product was analyzed, and the results are given in table 2 below.

**Example 7: ter-polymer**

1403 of dried toluene were firstly placed in a passivated, pressure-resistant 5 l stainless steel autoclave from Büchi (model 4; stainless steel: 1.4571; pressure rating: from -0.1 to 4.0 MPa) as reactor and cooled down to a temperature of 9 °C. Subsequently, 55 g of THF and 2 M n-butyl lithium (185 ml) were added while keeping the temperature of the reaction mixture at 10 °C. Subsequently 459 g styrene was added continuously at a pressure of 0.1 MPa within 30 minutes in such a way, that the temperature of the reaction mixture did not went up above 15 °C. Thereafter the pressure in the reactor is increased to 0.35 MPa using nitrogen and 811 g 1,3-butadiene was added continuously within 45 minutes while keeping the temperature at 20 °C. The pressure in the reactor increased to 0.4 MPa. Subsequently 127 g of divinylbenzene were added at 20 °C, and the mixture was stirred for another 20 minutes at a pressure of 0.4 MPa and a temperature of 20 °C. At atmospheric pressure 61 g of methanol was added and the reaction mixture was stirred for another 30 minutes at a temperature of 23 °C.

Afterwards 30 g of the filtration aid TONSIL®, sold by Clariant, was added and then the reaction mixture was filtrated, using a K800 filter from Seitz-Pall. From the raw solution obtained as filtrate the solvent(s) were removed using a rotary evaporator and reduced atmospheric pressure up to 10 mbar. 1270 g of a clear, viscous liquid was obtained which corresponds to a yield of about 91%. The product was analyzed, and the results are given in table 2 below.

**Example 8:**

695 g of dried cyclohexane were firstly placed in a passivated, pressure-resistant 5 l stainless steel autoclave from Büchi (model 4; stainless steel: 1.4571; pressure rating: from -0.1 to 4.0 MPa) as reactor and cooled down to a temperature of 10 °C. Subsequently, 885 g of THF and 2 M n-butyl lithium (260 ml) were added while keeping the temperature of the reaction mixture at 15 °C. Subsequently 424 g styrene was added continuously at a pressure of 0.1 MPa within 30 minutes in such a way, that the temperature of the reaction mixture did not went up above 15 °C. Thereafter the pressure in the reactor is increased to 0.35 MPa using nitrogen and 293 g 1,3-butadiene were added continuously within 30 minutes while keeping the temperature at 20 °C. The pressure in the reactor increased to 0.4 MPa. After the addition of the 1 ,3-butadiene was complete the reaction mixture was stirred for 20 minutes at a temperature of 30 °C. Then the reaction mixture was cooled down to 20 °C. At atmospheric pressure 85 g of methanol was added and the reaction mixture was stirred for another 30 minutes at a temperature of 23 °C.

Afterwards 30 g of the filtration aid TONSIL®, sold by Clariant, was added and then the reaction mixture was filtrated, using a K800 filter from Seitz-Pall. From the raw solution obtained as filtrate the solvent(s) were removed using a rotary evaporator and reduced atmospheric pressure up to 10 mbar. 667 g of a clear, viscous liquid was obtained which corresponds to a yield of about 93%. The product was analyzed, and the results are given in table 2 below.

Table 2:

| Example | Mn (Gesamt) | Mw | D | vinyl content (%) | Tg (°C) |
|---|---|---|---|---|---|
| 1 | 3607 | 3862 | 1.07 | 80,4 | -7 |
| 2 | 2954 | 3153 | 1.07 | 89,3 | +3 |
| 3 | 2549 | 2787 | 1.10 | 70,5 | -8 |
| 4 | 5345 | 5659 | 1.06 | 72,1 | -17 |
| 5 | 3654 | 3977 | 1.09 | 84,2 | -- |
| 6 | 3388 | 3726 | 1.10 | 81,9 | -13 |
| 7 | 4241 | 4462 | 1.05 | 82,9 | -10 |
| 8 | 1396 | 1650 | 1.18 | 87,2 | -10 |
| vinyl content (%) = proportion of (A), in the entirety of the 1 ,3-butadiene-derived monomer units present in the copolymer in mol-% | | | | | |

It can be seen from table 2, that the process according to the invention makes available co- and ter-polymers based on at least 1,3-butadiene and styrene as monomers having a relatively low number average molecular weight Mn of from 1,350 to 5,400 g/mol and a dispersity D between 1.0 to 1.25.

## Claims

1. Process for preparing a copolymer based on at least 1,3-butadiene and at least one hydrocarbon different from 1,3-butadiene comprising at least one olefinic double bond as monomers by solution polymerization utilizing one or more lithium organic compounds as initiator, **characterized in that** the polymerization is performed at a temperature of the reaction mixture of from 0 °C to 50 °C, preferably of from 5 °C to 45 °C.

2. Process according to Claim 1, **characterized in that** pentane, isooctane, n-octane, cyclohexane, n-hexane, benzene, toluene, xylene, and ethylbenzene, alone or in admixture is used as solvent.

3. Process according to Claim 1 or 2, **characterized in that** n-butyl lithium is used as initiator.

4. Process according to any of Claims 1 to 3, **characterized in that** the polymerization is performed at a pressure of from 0.1 to 5 MPa.

5. Process according to any of Claims 1 to 4, **characterized in that** it is performed as discontinuous process.

6. Process according to any of claims 1 to 5, **characterized in that** an amount of from 34 to 82% by weight of 1,3-butadiene based on the total mass of monomers is added to the reaction mixture.

7. Process according to any of claims 1 to 6, **characterized in that** first at least one hydrocarbon different from 1 ,3-butadiene comprising at least one olefinic double bond is added to the reaction mixture and after addition of the at least one hydrocarbon different from 1,3-butadiene comprising at least one olefinic double bond the 1,3-butadiene and optional monomers are added to the reaction mixture.

8. Copolymer comprising units derived from 1,3-butadiene and units derived from at least one hydrocarbon different from 1,3-butadiene comprising at least one olefinic double bond as monomer, **characterized in that** the copolymer comprises the monomer units (A), (B), and (C) derived from 1,3-butadiene

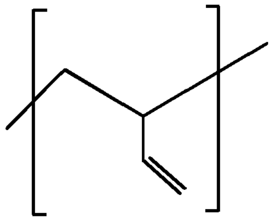

(A)

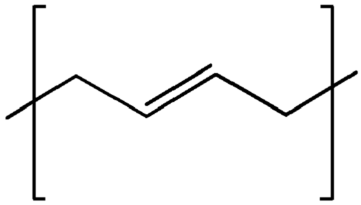

(B),

and

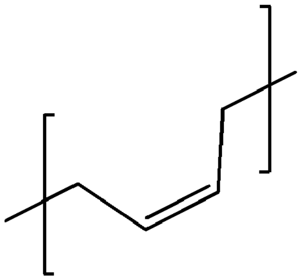

(C)

wherein the proportion of (A) in the entirety of the 1 ,3-butadiene-derived monomer units present in the copolymer is at least 60 mol-%, and wherein the sum of the proportions of (B) and (C) in the entirety of the 1,3-butadiene-derived monomer units present in the polybutadiene is not more than 40 mol-%, and that the copolymer has a number average molecular weight Mn of from 1,350 to 25,000 g/mol.

**9.** Copolymer according to claim 8, **characterized in that** it has a polydispersity of from 1.0 to 2.6, more preferably 1.05 to 1.4, determined as given in the description.

**10.** Copolymer according to claim 8 or 9, **characterized in that** it has a glass transition temperature $T_G$ of from -24 °C to 5 °C determined by the method given in the description.

**11.** Copolymer according to anyone of claims 8 to 10, **characterized in that** it comprises one or more units derived from styrene, divinylbenzene, ethyl-vinylbenzene, diisopropenylbenzene, or isoprene as monomer.

**12.** Copolymer according to claim 11, **characterized in that** it comprises one or more units derived from styrene and divinylbenzene as monomer, more preferably from styrene as monomer only.

**13.** Copolymer according to any of claims 8 to 12, **characterized in that** the copolymer is a random or block copolymer, more preferably a random copolymer.

**14.** Copolymer according to any of claims 8 to 13, obtained by a process according to any of claims 1 to 7.

**15.** Use of a copolymer according to any of claims 12 to 14, as reactive crosslinker, preferably for the preparation of casting compounds.

Europäisches Patentamt
European Patent Office
Office européen des brevets

# EUROPEAN SEARCH REPORT

Application Number
EP 23 16 0497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 477 512 A1 (XEROX CORP [US]) 1 April 1992 (1992-04-01) * examples 2,4,13 * ----- | 1-9, 11-15 | INV. C08F2/06 C08F212/08 C08F236/06 C08F236/10 |
| X | US 2019/194428 A1 (RECKER CARLA [DE] ET AL) 27 June 2019 (2019-06-27) * examples D3,D4; table 1 * ----- | 8-15 | |
| X | US 2019/169407 A1 (RECKER CARLA [DE] ET AL) 6 June 2019 (2019-06-06) * examples D3,D4; table 1 * ----- | 8-15 | |
| X | EP 3 763 783 A1 (SUMITOMO RUBBER IND [JP]) 13 January 2021 (2021-01-13) * paragraph [0196] * ----- | 8,9,11, 12,15 | |
| X | EP 3 006 493 A1 (SUMITOMO RUBBER IND [JP]) 13 April 2016 (2016-04-13) * paragraph [0062]; table 1 * ----- | 1-8, 11-15 | |
| X | US 5 532 327 A (BAYLEY ROBERT D [US] ET AL) 2 July 1996 (1996-07-02) * example trial 2 * ----- | 1-9, 11-15 | TECHNICAL FIELDS SEARCHED (IPC) C08F |
| X | WO 2021/232679 A1 (BEIJING RES INST CHEM IND CHINA PETRO) 25 November 2021 (2021-11-25) * examples 1-7,11-18, comp.ex.1,7,9,11; table 3 * ----- | 1-15 | |

The present search report has been drawn up for all claims

1

| Place of search | Date of completion of the search | Examiner |
|---|---|---|
| Munich | 4 August 2023 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 16 0497

This annex lists the patent family members relating to the patent documents cited in the above-mentioned European search report. The members are as contained in the European Patent Office EDP file on
The European Patent Office is in no way liable for these particulars which are merely given for the purpose of information.

04-08-2023

| Patent document cited in search report | Publication date | Patent family member(s) | Publication date |
|---|---|---|---|
| EP 0477512 A1 | 01-04-1992 | BR 9104032 A | 02-06-1992 |
| | | CA 2047816 A1 | 25-03-1992 |
| | | EP 0477512 A1 | 01-04-1992 |
| | | JP 3100694 B2 | 16-10-2000 |
| | | JP H04234768 A | 24-08-1992 |
| | | US 5158851 A | 27-10-1992 |
| US 2019194428 A1 | 27-06-2019 | CN 109562644 A | 02-04-2019 |
| | | EP 3500441 A1 | 26-06-2019 |
| | | ES 2895964 T3 | 23-02-2022 |
| | | JP 6799666 B2 | 16-12-2020 |
| | | JP 2019523331 A | 22-08-2019 |
| | | US 2019194428 A1 | 27-06-2019 |
| | | WO 2018033506 A1 | 22-02-2018 |
| US 2019169407 A1 | 06-06-2019 | CN 109562642 A | 02-04-2019 |
| | | EP 3500439 A1 | 26-06-2019 |
| | | ES 2882685 T3 | 02-12-2021 |
| | | JP 6823708 B2 | 03-02-2021 |
| | | JP 2019523330 A | 22-08-2019 |
| | | US 2019169407 A1 | 06-06-2019 |
| | | WO 2018033505 A1 | 22-02-2018 |
| EP 3763783 A1 | 13-01-2021 | CN 112055729 A | 08-12-2020 |
| | | EP 3763783 A1 | 13-01-2021 |
| | | JP 7298643 B2 | 27-06-2023 |
| | | JP 2020079336 A | 28-05-2020 |
| | | JP 2021119229 A | 12-08-2021 |
| | | US 2022017729 A1 | 20-01-2022 |
| | | WO 2020100492 A1 | 22-05-2020 |
| EP 3006493 A1 | 13-04-2016 | CN 105482208 A | 13-04-2016 |
| | | EP 3006493 A1 | 13-04-2016 |
| | | JP 6575236 B2 | 18-09-2019 |
| | | JP 2016074880 A | 12-05-2016 |
| | | RU 2015139937 A | 24-03-2017 |
| | | US 2016096948 A1 | 07-04-2016 |
| US 5532327 A | 02-07-1996 | NONE | |
| WO 2021232679 A1 | 25-11-2021 | BR 112022023644 A2 | 31-01-2023 |
| | | CA 3184006 A1 | 25-11-2021 |
| | | CN 113698536 A | 26-11-2021 |
| | | EP 4148075 A1 | 15-03-2023 |
| | | JP 2023527178 A | 27-06-2023 |
| | | KR 20230013134 A | 26-01-2023 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 23 16 0497

This annex lists the patent family members relating to the patent documents cited in the above-mentioned European search report. The members are as contained in the European Patent Office EDP file on
The European Patent Office is in no way liable for these particulars which are merely given for the purpose of information.

04-08-2023

| Patent document cited in search report | Publication date | Patent family member(s) | Publication date |
|---|---|---|---|
| | | TW 202144443 A | 01-12-2021 |
| | | WO 2021232679 A1 | 25-11-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100206443 A1
- CN 100596300 C
- CN 109749010 A
- US 4367325 A
- US 4139690 A
- US 2975160 A